# EUROPÄISCHE PATENTANMELDUNG

(11) **EP 0 589 321 A1**
(43) Veröffentlichungstag der Anmeldung: **30.03.1994**
(21) Anmeldenummer: 93114674.0
(22) Anmeldetag: 13.09.1993
(51) Int. Cl.: B29B 13/10, B29C 47/52, B29B 17/00

(54) **Walzenanlage zum Zerkleinern von Kunststoffen**

(30) Priorität: 24.09.1992 DE 4232014
(71) Anmelder: BAYER AG, 51368 Leverkusen (DE)
(72) Erfinder: Wagner, Joachim, Dr., D-51061 Köln (DE); Rasshofer, Werner, Dr., D-51061 Köln (DE)

(57) **Zusammenfassung**

Insbesondere für das Recycling lassen sich beliebige Kunststoffe oder Kunststoff enthaltende Komposite, Gemische oder Gemenge sowie organische und natürliche Polymere, wie Zellulose (Stroh, Holz), in einer aus einer Walze (1) und einem Gegenblock (2) gebildeten Walzenanlage zerkleinern, wobei das Material in einen von der Walze (1) und einer konkaven Gegenfläche (7) des Gegenblockes (2) gebildeten, sich von seiner maximal 100 mm weiten Eintrittsöffnung (4) auf minimal 0,025 mm verjüngenden Einzugsspalt (5) eingezogen wird, und wobei in einem anschließenden Zerkleinerungsspalt (8) eine Schergeschwindigkeit von 100 sec⁻¹ bis 20 000 sec⁻¹ aufrechterhaltbar ist.

## Beschreibung

Die Erfindung betrifft eine Walzenanlage zum Zerkleinern von beliebigen Kunststoffen oder Kunststoffe enthaltenden Kompositen, Gemischen und Gemengen mit einer Mindestdichte von 0,005 g/cm³.

Alle Verfahren zum Recycling von Kunststoffen beinhalten eine Zerkleinerungsstufe. Die Kosten der Zerkleinerungsstufe beeinflussen jedoch maßgeblich die Wirtschaftlichkeit des Verfahrens und sind entscheidend, ob sich die gesellschaftlich gewünschte Wiederverwertung gebrauchter Kunststoffe überhaupt durchsetzen kann. Eine preiswerte Zerkleinerung ist aber auch für organische, natürliche Polymere, wie Cellulose (Holz, Stroh), erwünscht.

Es besteht deshalb die Aufgabe, eine Walzenanlage zur Verfügung zu stellen, welche ein effizientes Zerkleinern, insbesondere die Pulverherstellung, aus beliebigen Kunststoffen, Kunststoffe enthaltenden Kompositen, Gemischen und Gemengen, aber auch aus organischen, natürlichen Polymeren, wie Cellulose (Holz, Stroh), erlaubt.

Bereits bekannt ist die Zerkleinerung von solchen Materialien mit Mühlen oder Extrudern. Bei Mühlen müssen die Einsatzstoffe bereits stark vorzerkleinert - in der Regel geschreddert und anschließend granuliert - sein. Bei - wie für viele Recycling-Verfahren notwendig - sehr kleinen Korngrößen sind Mühlen von beliebiger Auslegung jedoch zu teuer, da in diesen Maschinen nur noch kleine Mengen durchgesetzt werden können. Pulverherstellung ist in vielen Fällen nur über eine cryogene Mahltechnik möglich; diese ist wegen der zusätzlich benötigten Kältemittel sehr energieaufwendig.

Es ist auch bekannt, Altgummi mit Hilfe von Extrudern zu zerkleinern (z.B. DE-OS 3 332 629 und J. Janik und L. Bouskova, Int. Polym. Sci. Technol. (1990) 17(3), T/33/T37). Jedoch auch hier müssen die Materialien vorzerkleinert - in der Regel granuliert - werden. Schwierigkeiten macht auch die Brückenbildung im Einzugsbereich des Extruders bei solchen Materialien, die nur eine geringe Dichte und eine stark zerklüftete Oberfläche aufweisen, wodurch ein kontinuierliches Arbeiten bei der Pulverherstellung erschwert wird. Die bislang bekannten Extruder-Mahlverfahren ergeben Pulver der Teilchengröße im Bereich von 300 µm bis 500 µm.

Es ist weiterhin bekannt, Altgummistücke über Riffelwalzen zu granulieren. Hierbei werden spezielle geriffelte Walzenanlagen verwendet, um Altreifenstücke für das Extruder-Mahlen vorzuzerkleinern. In diesen Fällen werden minimale Partikelgrößen von ca. 3 mm erreicht.

Überraschenderweise wurde nun gefunden, daß diese Schwierigkeiten mit einer Walzenanlage überwunden werden, wie sie nachstehend näher beschrieben ist.

Gegenstand der vorliegenden Erfindung ist also eine Walzenanlage zur Zerkleinerung, insbesondere Pulverherstellung, aus beliebigen Kunststoffen oder Kunststoffe enthaltenden Kompositen, Gemischen oder Gemengen, aber auch aus organischen, natürlichen Polymeren, wie Cellulose (Holz, Stroh). Die Mindestdichte des zu zerkleinernden Materials soll 0,005 g/cm³ betragen.

Das Neue ist in einem Einzugsspalt zu sehen, welcher einerseits durch die Mantelfläche einer Walze und andererseits durch eine konkave Gegenfläche eines Gegenblockes gebildet ist, wobei sich der Einzugsspalt von maximal 100 mm an seiner Eintrittsöffnung auf minimal 0,025 mm, bevorzugt von maximal 20 mm auf minimal 0,05 mm, besonders bevorzugt von maximal 10 mm auf minimal 0,25 mm, verjüngt, um eine Verdichtung des Materials zu erzeugen, und wobei der daran anschließende, eigentliche Zerkleinerungsspalt so gestaltet ist, daß darin eine Schergeschwindigkeit von 100 sec⁻¹ bis 20 000 sec⁻¹, bevorzugt 1 000 sec⁻¹ bis 10 000 sec⁻¹, vorhanden ist.

Da nur eine Walze Verwendung findet, ist die neue Walzenanlage im Aufbau einfacher und weniger störanfällig. Der eigentliche, sich an den Einzugsspalt anschließende Zerkleinerungsspalt kann sich über einen größeren Teil des Walzenumfanges erstrecken, wodurch ein effektiverer Zerkleinerungsvorgang gewährleistet wird als bei einem Walzenpaar. Wie bei Walzenanlagen üblich, besteht die Walze vorzugsweise aus Metall. Die konkave Gegenfläche des Gegenblockes kann erforderlichenfalls mit Platten aus hoch verschleißfesten Metallegierungen belegt sein. Dies ist insbesondere dann zu empfehlen, wenn die zu zerkleinernden Materialien abrasive Füllstoffe enthalten.

Als besonders geeignet hat sich die neue Walzenanlage für die Zerkleinerung, insbesondere Pulverisierung, chemisch und/oder physikalisch vernetzter Polyurethane, Polyharnstoffe bzw. Polyurethanharnstoffe, insbesondere in Form von Weichschaumstoffen, erwiesen. Gerade Weichschaumstoffe bereiten nämlich bei der Zerkleinerung wegen ihrer Elastizität besondere Schwierigkeiten, weil die Gefahr besteht, daß zusammengepreßte Flocken nicht ausreichend zerkleinert und so durch den Walzenspalt gezogen werden. Überraschenderweise wurde gefunden, daß die neue Walzenanlage diesen Nachteil ausschließt.

Vorzugsweise verjüngt sich der Einzugsspalt kontinuierlich.

Alternativ hierzu verjüngt sich der Einzugsspalt zonenweise.

Je nach dem zu zerkleinernden Material können beide Ausführungsformen ihre Vorteile haben. Im zweiten Falle ist es möglich, daß jede Zone eine konstante Spaltbreite aufweist; jede Zone kann aber auch in sich eine Verjüngung besitzen. Die Übergänge zwischen den einzelnen Zonen können sprunghaft sein; aber auch stetige Übergänge können bei der Zerkleinerung gewisser Materialien von Vorteil sein. Der eigentliche Zerkleinerungsspalt weist in der Regel konstante Spaltweite auf, und zwar vorzugsweise maximal jene, welche der Einzugsspalt am Übergang in diesen Zerkleinerungsspalt besitzt.

Vorzugsweise weist die Walze und/oder der Gegenblock eine Temperiervorrichtung auf, womit eine Temperatur im Einzugsspalt und im Zerkleinerungsspalt von 0°C bis 200°C einstellbar ist. Die Beheizung der Walzenanlage, beispielsweise durch Beheizen der Walze und/oder des Gegenblockes, kann aber für die Verarbeitung gewisser Materialien von Vorteil sein. In vielen Fällen ist es aber vorteilhafter, die Walzenanlage zu kühlen, denn durch die auftretende Friktionswärme könnte eine thermische Schädigung des zu zerkleinernden Materials auftreten bzw. Thermoplaste könnten sogar anfangen klebrig oder schmelzflüssig zu werden, wodurch die Anlage verunreinigt würde.

Falls ausreichend, wird man die Temperiermittel nur in dem Gegenblock vorsehen, weil hier keine Gleitringdichtungen nötig sind, wie sie bei der rotierenden Walze erforderlich wären.

Vorzugsweise weist die Walze eine Oberflächenstruktur der gemittelten Rauhtiefe (nach DIN 4768, 4762) im Bereich von 0,01 mm bis 0,1 mm auf. Eine gemittelte Rauhtiefe in diesem Bereich fördert das Einziehen des Materials in den Einzugsspalt und seine Zerkleinerung.

Es können aber auch andere Walzenoberflächen vorgesehen sind, wie beispielsweise polierte, geätzte, geriffelte oder gekörnte.

Um Riefenbildung zu vermeiden, werden gemäß einer weiteren besonderen Ausführungsform der neuen Walzenanlage Walze und Gegenblock relativ zueinander in Achsrichtung der Walze periodisch hin und her bewegt. Es genügt, wenn entweder die Walze oder der Gegenblock bewegt wird. Konstruktiv bietet es sich an, den Gegenblock hin und her zu bewegen, weil sich dies einfacher bewerkstelligen läßt als bei der rotierenden Walze.

Die neue Walzenanlage erlaubt es, die damit zerkleinerten Materialien vorteilhaft zu verarbeiten, und zwar kann Material aus beliebigen Kunststoffen mit stark unterschiedlichen Dichten auch gemeinsam verarbeitet werden; beliebige Gemische aus thermoplastischen und duroplastischen Kunststoffen lassen sich verarbeiten, beliebige Gemische aus spröden und elastischen bzw. weichelastischen Materialien ebenfalls. Auch Gemische aus Thermoplasten und Duroplasten, die sich vorher wegen zu grobem Duroplastanteils nicht verspritzen ließen oder die jetzt bessere Eigenschaften besitzen, da die Duromerpartikel durch ihre sehr geringe Größe und gute Verteilung nun sehr gut in die Thermoplastmatrix einzubinden sind, lassen sich nunmehr vorteilhaft verwenden. Vor allem hat sich die neue Walzenanlage als wirtschaftlich erwiesen bzw. die damit aufbereiteten Altmaterialien lassen sich besonders wirtschaftlich weiterverarbeiten.

Eine Vorzerkleinerung ist materialabhängig und meist nur bis zu einem der Höhe der Einzugsöffnung des Einzugsspaltes entsprechenden Partikeldurchmesser notwendig.

Bevorzugte Kunststoffe für die neuartige Zerkleinerung sind thermoplastische oder duroplastische Polyurethane, Polyurethanharnstoffe oder Polyharnstoffe, deren Blends/Composite mit anderen Kunststoffen, Polycarbonat und Polycarbonatblends mit anderen Kunststoffen, ABS und ABS-Blends mit anderen Kunststoffen, PVC und PVC-Blends mit anderen Kunststoffen, SMA, Polyamid und Polyamid-Blends mit anderen thermoplastischen Kunststoffen, Polyolefine oder Polyolefinblends mit anderen thermoplastischen Kunststoffen, besonders bevorzugt Polypropylenharze oder Polystyrolharze. Auch sind vernetzte Kautschuke einsetzbar.

Die angegebenen Kunststoffe können noch weiter modifiziert sein. So können sie übliche mineralische oder organische Füllstoffe oder Verstärkungsmaterialien in faserförmiger, flächiger oder anderer Art in kontinuierlicher oder diskreter Struktur haben, sie können übliche Verarbeitungshilfsmittel oder Mittel zur Verbesserung von mechanischen Oberflächen- oder Alterungseigenschaften beinhalten. Die angegebenen Kunststoffe bzw. der Artikel daraus können auch lackiert sein oder eine anderweitige Oberflächenmodifizierung durch stromlose oder elektrolytische Metallisierung oder Plattierung, Oberflächenätzung, Plasmabehandlung etc. erfahren haben.

Besonders bevorzugt sind thermoplastische oder duroplastische Polyurethane, Polyurethanharnstoffe oder Polyharnstoffe, wie sie z.B. beschrieben sind in Kunststoff Handbuch, Band 7, "Polyurethane", Carl Hanser-Verlag München/Wien, 1. Auflage 1966 und 2. Auflage 1983.

Solche Polyurethane, Polyurethanharnstoffe oder Polyharnstoffe haben eine Dichte von größer 0,5 kg/m³ und werden z.B. im Kfz-Bau zur Herstellung von Stoßfängern, für Dachhimmel, Hutablagen, Kofferraumauskleidungen, Türinnenverkleidungen, Kopfstützen, Sitze, Armaturentafeln, Konsolen, in energieabsorbierenden Schäumen etc. eingesetzt. Aus solchen Materialien werden im Möbelsektor Polster, Matratzen und dergleichen hergestellt.

Ebenfalls besonders bevorzugt sind Verbundkörper oder Gemische aus diesen thermoplastischen oder duroplastischen Polyurethanen, Polyurethanharnstoffen oder Polyharnstoffen mit Materialien, wie sie zur Herstellung von Verbundkörpern eingesetzt werden, wobei diese Materialien z.B. Glasmatten, Textilien, Kunststoffolien, Schaumfolien, Holzkörper oder auch duromergebundene Zellulosematerialien sein können.

Das so hergestellte zerkleinerte Material, insbesondere Pulver, eignet sich als Ausgangsmaterial für verschiedenste Recycling-Techniken. Thermoplasten können in Pulverform der konventionellen Thermoplastverarbeitung zugeführt werden und lassen sich dabei relativ einfach verarbeiten und dabei blenden. Polyurethane sind in dieser Pulverform bei chemolytischen Verfahren, wie z.B. Glykolyse, Alkoholyse, Aminolyse und Hydrolyse, vorteilhaft einsetzbar. Auch für das Fließpressen und die Spritzgußverarbeitung ist die Pulverform vorteilhaft; dies gilt besonders für lackiertes Ausgangsmaterial. Für den Einsatz als matrixähnliches und matrixgleiches Füllmaterial in PUR-Formulierungen ist die Pulverform in möglichst feiner Verteilung eine notwendige Voraussetzung für hohes Eigenschaftsniveau und gute Oberflächengestaltung. Die so hergestellten Polymerpulver können für thermische Behandlungsverfahren vorteilhaft eingesetzt werden.

In der Zeichnung ist die neue Walzenanlage in einem Ausführungsbeispiel rein schematisch dargestellt und nachstehend näher erläutert. Es zeigen:
- Fig. 1: eine Walzenanlage mit einem sich kontinuierlich verjüngenden Einzugspalt und
- Fig. 2: eine Walzenanlage mit sich zonenweise verjüngendem Einzugspalt.

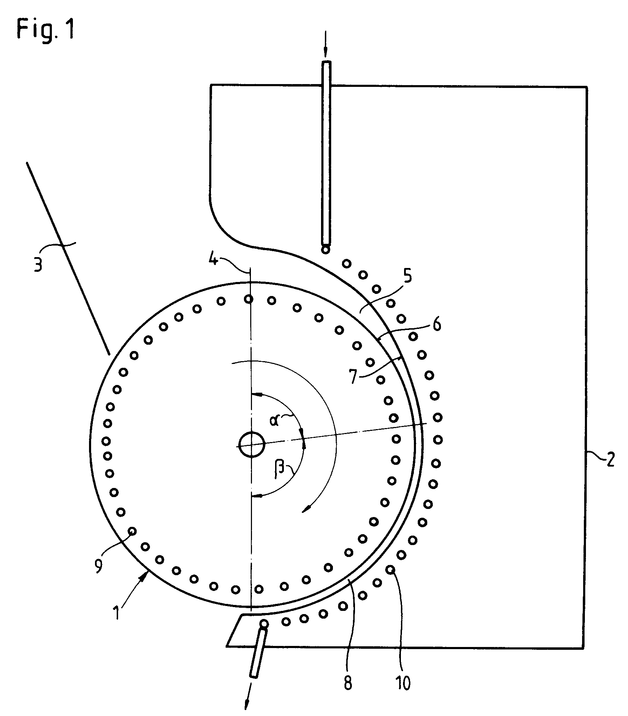

In Fig. 1 besteht die Walzenanlage aus einer 1 m breiten Walze 1 von 600 mm Durchmesser und einem Gegenblock 2. An einen darüber angeordneten Beschickungstrichter 3 schließt sich eine Eintrittsöffnung 4 eines Einzugsspaltes 5 an. Dieser ist durch die eine Rauhtiefe von 0,05 mm aufweisende Mantelfläche 6 der Walze 1 und eine konkav gekrümmte Gegenfläche 7 des Gegenblockes 2 gleicher Rauhtiefe begrenzt. An der Eintrittsöffnung 4 besitzt der Einzugsspalt 5 eine Spaltweite von 200 mm und er verjüngt sich über einen Winkelbereich α von 80° kontinuierlich auf eine Spaltweite von 0,1 mm. Schließlich geht er unmittelbar in einen Zerkleinerungsspalt 8 von ebenfalls 0,1 mm Spaltweite über, welcher sich über einen Winkelbereich β von 100° der Walze 1 erstreckt. Die Walze 1 ist mit einer Temperiervorrichtung 9 versehen, so daß ein fließfähiges Heiz- oder Kühlmedium hindurchströmen kann. Auch hinter der Gegenfläche 7 des Gegenblockes 2 ist eine von einem Heiz- oder Kühlmedium durchströmbare Temperiervorrichtung 10 angeordnet.

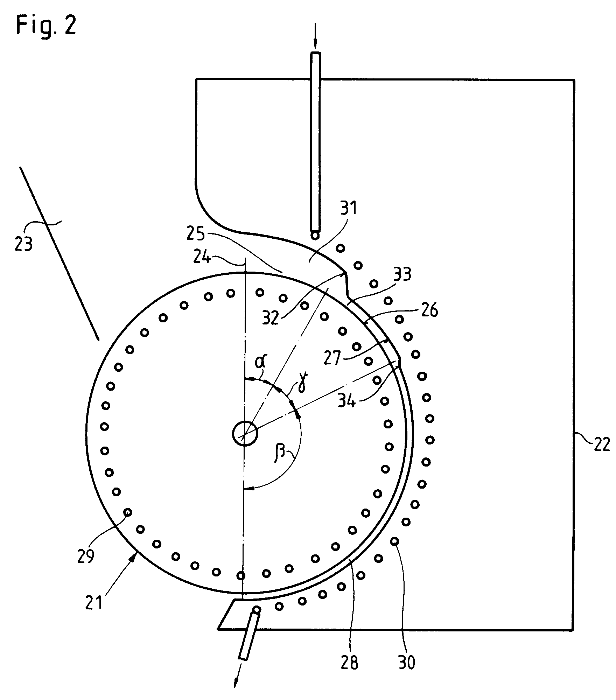

In Fig. 2 besteht die Walzenanlage aus einer 1 m breiten Walze 21 von 600 mm Durchmesser und einem Gegenblock 22. An einen darüber angeordneten Beschickungstrichter 23 schließt sich eine Eintrittsöffnung 24 eines Einzugsspaltes 25 an. Dieser ist durch eine glatte Mantelfläche 26 der Walze 21 und eine konkav gekrümmte Gegenfläche 27 des Gegenblockes 22 begrenzt. An der Eintrittsöffnung 24 besitzt der Einzugsspalt 25 eine Spaltweite von 200 mm und verjüngt sich am Ende einer ersten Zone 31 auf 10 mm, an welche sich ein abgerundeter Übergang 32 anschließt, welcher den Eingang einer zweiten Zone 33 konstanter Spaltweite von 0,15 mm bildet. Die Oberfläche der Zone 31 ist glatt, jene der Zone 33 weist eine Rauhtiefe von 0,1 mm auf.

Die Zone 31 erstreckt sich über einen Winkelbereich α von 30°, die Zone 33 über einen Winkelbereich γ von 40°. Daran schließt sich mit einem weiteren sanften Übergang 34 der eigentliche Zerkleinerungsspalt 28 mit einer konstanten Spaltweite von 0,15 mm über einen Winkelbereich β von 110° an. Die Walze 21 ist mit einer Temperiervorrichtung 29 versehen, so daß fließfähiges Heiz- oder Kühlmedium hindurchströmen kann. Auch hinter der Gegenfläche 27 des Gegenblockes 22 ist eine von einem Heiz- oder Kühlmedium durchströmbare Temperiervorrichtung 30 angeordnet.

### Beispiel 1

Der Walzenanlage gemäß Fig. 1 wird ein auf maximal 100 mm größter Ausdehnung vorzerkleinertes Material aus Polyurethanweichschaumstoff mit einer Dichte der einzelnen Partikel von 0,05 g pro cm³ in einer Menge von 130 kg/h zugeführt. Die Walze 1 rotiert mit einer Drehzahl von 30 min⁻¹, wodurch im Zerkleinerungsspalt 8 eine Schergeschwindigkeit von 9.400 sec⁻¹ erzeugt wird. Die Temperiervorrichtungen 9 und 10 werden mit Kühlwasser beschickt, um die Temperatur im Einzugsspalt 5 und im Zerkleinerungsspalt 8 unterhalb von 60°C zu halten. Es fällt ein Pulver von 80 µm mittlerer Korngröße an.

### Beispiel 2

Der Walzenanlage gemäß Fig. 2 wird ein auf maximal 100 mm größter Ausdehnung vorzerkleinertes Material aus glasfaserverstärkten Polyurethanhartschaumstoffplatten mit Alufoliendeckschichten in einer Menge von 80 kg/h zugeführt. Die Walze 1 rotiert mit einer Drehzahl von 30 min⁻¹, wodurch im Zerkleinerungsspalt 28 eine Schergeschwindigkeit von 6.300 sec⁻¹ erzeugt wird. Die Temperiervorrichtungen 29 und 30 werden mit Kühlwasser beschickt, um die Temperatur im Einzugsspalt 25 und im Zerkleinerungsspalt 28 unterhalb von 60°C zu halten. Es fällt ein Pulver mit einer Korngröße von 105 µm an. Der Anteil an pulverisierter Aluminiumfolie läßt sich erforderlichenfalls durch Windsichten abtrennen.

## Patentansprüche

1. Vorrichtung zum Zerkleinern von Kunststoffen, Kunststoff enthaltenden Kompositen, Gemischen oder Gemengen mit einer Mindestdichte von 0,005 g/cm³, bestehend aus einem Einzugsspalt (5, 25), dadurch gekennzeichnet, daß dieser Einzugsspalt (5, 25) einerseits durch die Mantelfläche (6, 26) einer Walze (1, 21) und andererseits durch eine konkave Gegenfläche (7, 27) eines Gegenblockes (2, 22) gebildet ist, daß sich der Einzugsspalt von maximal 100 mm an seiner Eintrittsöffnung (4, 24) auf minimal 0,025 mm verjüngt, daß daran der eigentliche Zerkleinerungsspalt (8, 28) anschließt, in welchem eine Schergeschwindigkeit von 100 sec⁻¹ bis 20 000 sec⁻¹ einstellbar ist.

2. Vorrichtung nach Anspruch 1, dadurch gekennzeichnet, daß sich der Einzugsspalt (4) kontinuierlich verjüngt.

3. Vorrichtung nach Anspruch 1, dadurch gekennzeichnet, daß der Einzugsspalt (24) Zonen (31, 33) unterschiedlicher Spaltweite aufweist.

4. Vorrichtung nach einem der Ansprüche 1, 2 oder 3, gekennzeichnet durch eine Temperiervorrichtung (9, 10; 29, 30) in der Walze (1, 21) und/oder im Gegenblock (2, 22), mit welcher eine Temperatur im Einzugsspalt (5, 25) und im Zerkleinerungsspalt (8, 28) von 0°C bis 200°C einstellbar ist.

5. Vorrichtung nach einem der Ansprüche 1 bis 4, dadurch gekennzeichnet, daß die Walze (1) eine Oberflächenstruktur der gemittelten Rauhtiefe im Bereich von 0,01 mm bis 0,1 mm aufweist.

6. Vorrichtung nach einem der Ansprüche 1 bis 5, dadurch gekennzeichnet, daß die Walze (1) eine glatte Oberfläche aufweist.
